# EUROPÄISCHE PATENTANMELDUNG

(11) **EP 1 797 974 A2**
(43) Veröffentlichungstag der Anmeldung: **20.06.2007**
(21) Anmeldenummer: 06025681.5
(22) Anmeldetag: 12.12.2006
(51) Int. Cl.: B21D 5/08

(54) **Verfahren zur Herstellung eines Querträgers, insbesondere für ein Kraftfahrzeug**

(30) Priorität: 14.12.2005 DE 102005060252
(71) Anmelder: Behr GmbH & Co. KG, 70469 Stuttgart (DE)
(72) Erfinder: Specht, Gregor, Dip.-Ing., 70435 Stuttgart (DE)

(57) **Zusammenfassung**

Die Erfindung betrifft ein Verfahren zur Herstellung eines Querträger, insbesondere für ein Kraftfahrzeug, wobei in einem ersten Schritt ein Blech in einer Vorstanzstation (4) gelocht wird, so dass zumindest eine Öffnung im Blech vorgesehen ist, in einem zweiten Schritt in zumindest einer Tiefziehstation (5) ein Teilbereich des Blechs tiefgezogen wird, und in einem dritten Schritt das Profil des Querträgers in einer Profilierstation (6) gebogen wird, sowie eine entsprechende Einrichtung zur Durchführung des Verfahrens.

## Beschreibung

Die Erfindung betrifft ein Verfahren zur Herstellung eines Querträgers oder eines Strukturbauteils, insbesondere für ein Kraftfahrzeug, gemäß dem Oberbegriff des Anspruchs 1.

Die Herstellung von Querträgern kann mittels Stahlbändern erfolgen, die vom Coil abgewickelt und über Rollen gewalzt werden, so dass sie das gewünschte Profil erhalten. Löcher, die im Querträger vorzusehen sind, können entweder durch Stanzen vor dem Rollvorgang oder durch nachträgliches Lochen eingebracht werden. Dabei ist das Einbringen eines Lochs in ein gewölbtes Werkstück aufwändiger als bei einem flachen Werkstück. Soll das Loch einen umschließenden Kragen aufweisen, so müssen die Ziehkräfte in unmittelbarer Lochnähe aufgefangen werden, um eine unerwünschte Verformung des Werkstücks in der Umgebung des auszubildenden Kragens zu verhindern. Ein derartiges Verfahren ist jedoch relativ zeitaufwändig und daher nicht immer wirtschaftlich durchführbar.

Aus der DE 198 18 234 A1 ist eine Rollprofiliereinrichtung zur Herstellung von Roll- oder Walzprofilelementen bekannt, wobei ein Blechband zwischen zwei sich in entgegengesetzter Richtung drehenden Walzen durchläuft, wobei eine der Walzen eine Erhebung und die andere Walze eine entsprechend als Negativform ausgebildete Vertiefung aufweist. Die Drehungen der Walzen sind so aufeinander abgestimmt, dass die Erhebung in die Vertiefung gelangt, wodurch das dazwischen angeordnete Blech im entsprechenden Bereich umgeformt wird. Auf diese Weise lassen sich Sicken, Löcher oder Querverformungen in ein Blechband einbringen. In Hinblick auf die Gestaltungsfreiheit lässt jedoch diese Einrichtung Wünsche offen.

Es ist Aufgabe der Erfindung, ein verbessertes Verfahren zur Herstellung eines Querträgers oder eines Strukturbauteils, insbesondere für ein Kraftfahrzeug, zur Verfügung zu stellen.

Diese Aufgabe wird gelöst durch ein Verfahren mit den Merkmalen des Anspruchs 1. Vorteilhafte Ausgestaltungen sind Gegenstand der Unteransprüche. Der Einfachheit halber wird hierauf im Folgenden lediglich auf einen Querträger Bezug genommen, jedoch kann ein entsprechend ausgebildetes Element auch an anderen Stellen als sonstiges Strukturbauteil verwendet werden.

Erfindungsgemäß ist ein Verfahren zur Herstellung eines Querträger, insbesondere für ein Kraftfahrzeug, wobei in einem ersten Schritt ein Blech in einer Vorstanzstation gelocht wird, so dass zumindest eine Öffnung im Blech vorgesehen ist, in einem zweiten Schritt ein Teilbereich des Blechs in einer Tiefziehstation tiefgezogen wird, und in einem dritten Schritt das Profil des Querträgers in einer Profilierstation gebogen wird, wobei die Verfahrensschritte bevorzugt in genau dieser Reihenfolge ablaufen. Im Gegensatz zum Stand der Technik mit geschlossenen Profilen erfolgt die Herstellung der Öffnung bevor das (Hohl-)Profil ausgebildet ist. Vorteilhafterweise wird in der Tiefziehstation ein Kragen um die Öffnung ausgebildet. Dabei ist das Tiefziehen des Kragenbereichs um die Öffnung einfach und kann schnell in einer Presse mit einem entsprechenden Stempel durchgeführt werden, wobei die Prozesszeiten für einen entsprechenden Umformvorgang im Sekundenbereich liegen. Zudem ist keine Handarbeit erforderlich. Somit kann ein Querträger schnell und wirtschaftlich hergestellt werden. Im Unterschied zu zweiteiligen Querträgern (Halbschalen o.ä.) entfallen die zum Verbinden der beiden Teile erforderlichen Flansche, so dass neben verringerten Produktionszeiten auch Material, Gewicht und Bauraum eingespart wird. Das Querträger-Profil wird vorteilhafterweise im Querschnitt über genau eine Schließnaht geschlossen.

Beim Blech handelt es sich vorzugsweise um ein Bandmaterial, insbesondere im Dickenbereich von 0,5 bis 3 mm, das in einem Coil angeliefert, vom Coil direkt in der Einrichtung, also vor Ort, abgewickelt und über einen Bandvorschub der Vorschubstation zugeführt wird. Ein Ablängen von Zuschnitten für die einzelnen herzustellenden Querträger ist nicht erforderlich. Vielmehr erfolgt vorzugsweise erst nach dem Schließen des Profils, also vorzugsweise nach einem Schweißvorgang, das Ablängen. Dadurch, dass ein Bandmaterial vorliegt, können die einzelnen Verfahrensschritte kontinuierlich durchgeführt werden. Zwischen den einzelnen Stationen bevor das Blech zum Querträgerprofil umgebogen wird, sind in Folge der elastischen Verformbarkeit des Bandmaterials durch durchhängende Bereiche Pufferbereiche oder Pufferstationen möglich.

In der Profilierstation wird das flache Blech vorzugsweise vom Rand her mittels Rollensätzen zu einer Profilblume gewalzt. Vorzugsweise wird zuerst im äußeren Bereich beidseitig ein Rand vorzugsweise das flache Blech vorzugsweise vom Rand her mittels Rollprofilierens umgebogen und anschließend weiter innen der Bereich mit den Rändern nach oben gebogen, vorzugsweise ebenfalls mittels Rollprofilierens, so dass sich die Endbereiche der Ränder berühren oder überlappen. Somit erfolgt ein Umformen in mehreren Schritten, wobei jeder Schritt vorzugsweise durch mindestens ein Rollenpaar durchgeführt wird oder über mehrere Walzen, wobei bevorzugt geschlossene Querschnitte erzeugt werden, die z.B. die Form eines Rechtecks oder Stems aufweisen können. Im Bereich der tiefgezogenen, umlaufenden Lochränder ist der Profilquerschnitt bevorzugt gerade.

Bevorzugt ist nach der Profilierstation eine Schweißstation angeordnet, in welcher ein Schweißvorgang erfolgt, so dass die sich berührenden und/oder überlappenden Enden miteinander verschweißt werden und dadurch das Profil geschlossen wird. Das Verschweißen kann mittels Hochfrequenzschweißens, WIG- oder Laserweißens o.ä. erfolgen.

Das Ablängen der einzelnen Querträger, bspw. mittels einer mit der Vorschubbewegung des Bandes mitbewegten Säge, Laserschneidens oder eines anderen geeigneten Verfahrens, erfolgt bevorzugt nach dem Schweißvorgang in einer Trennstation. Bei Bedarf kann der Trennstation eine Kalibrierstation vorgelagert sein. Nach erfolgtem Verschweißen sind die Querträger so formstabil, dass sie einfach und problemlos gehandhabt werden können, was vor dem Umformen und ggf. auch vor dem Schweißen in Folge des geringeren Widerstandsmoments der entsprechenden Querschnitte nicht in der Form möglich ist.

Eine Einrichtung zur Durchführung eines entsprechenden, erfindungsgemäßen Verfahrens umfasst bevorzugt eine Coilaufnahme zur Aufnahme eines Coils, einen Bandvorschub, um das Bandmaterial vom Coil abzuwickeln und den nachfolgenden Stationen zuzuführen, eine Vorstanzstation, in welcher Öffnungen in das Bandmaterial gestanzt werden, eine Tiefziehstation, in der die Ränder der Öffnungen zu einem Kragen umgebogen werden, eine Profilierstation, in welcher das Profil des Querträgers gebogen wird, und eine Trennstation, in welcher die Querträger abgelängt werden. Nach der Profilierstation und vor der Trennstation ist vorzugsweise eine Schweißstation vorgesehen. Zwischen der Schweißstation und der Trennstation können Stationen für ein Nachverzinken oder Kalibrieren vorgesehen sein. Vorteilhafterweise kann nach der Trennstation eine Biegestation vorgesehen sein.

Ein Querträger, der nach dem beschriebenen der Erfindung folgenden Verfahren hergestellt wird, weist vorteilhafterweise einen geschlossenen Querschnitt mit genau einer Schließnaht und einem nach außen weisenden Lochrand auf. Bevorzugt sind an dem Querträger weitere Halter, Schweißbolzen oder andere Anbauteile angebracht. Der Querträger ist insbesondere mit Anbauteilen in ein Fahrzeug eingebaut.

Im Folgenden wird das erfindungsgemäße Verfahren anhand eines Ausführungsbeispiels unter Bezugnahme auf die Zeichnung im Einzelnen erläutert. In der Zeichnung zeigen:

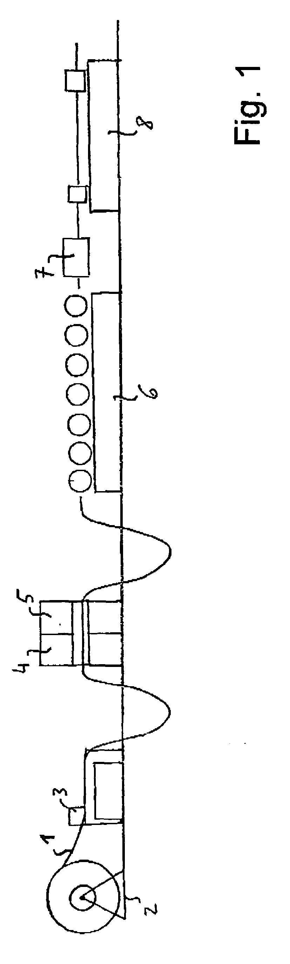

- Fig. 1: eine schematische Darstellung einer Einrichtung zum Herstellen von Querträgern,
- Fig. 2: eine schematische Schnittdarstellung quer durch den Querträger an verschiedenen Stationen,
- Fig.3: eine perspektivische Darstellung des Endbereichs eines Querträgers, und
- Fig. 4: einen Schnitt durch eine im Querträger vorgesehene ausgekragte Öffnung.

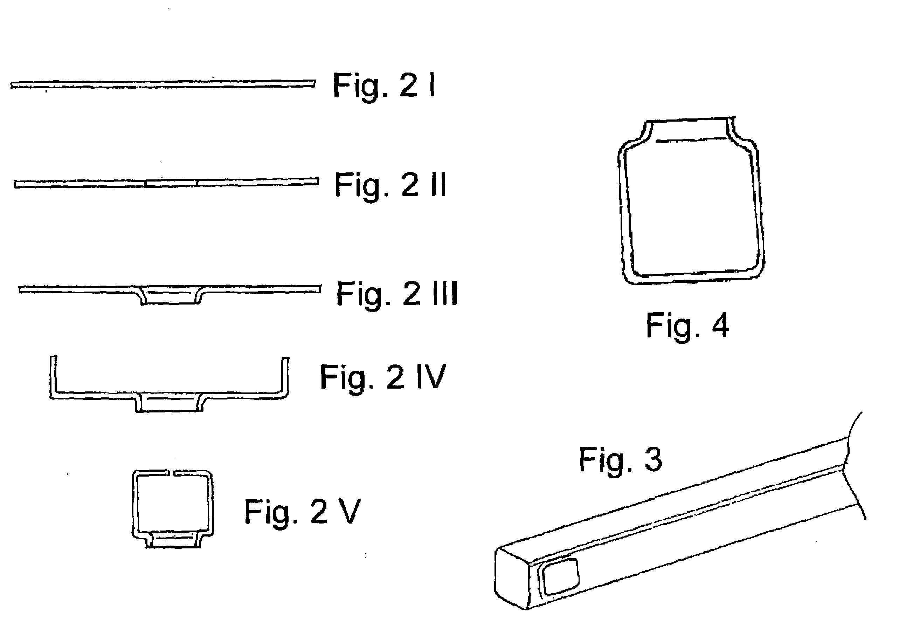

Bei einer erfindungsgemäßen Einrichtung zur kontinuierlichen Herstellung von Querträgern wird Bandmaterial 1, das in Coilform aufgewickelt und der Coil in einer Coilaufnahme 2 angeordnet ist, mit Hilfe eines Bandvorschubs 3 abgewickelt. Ein Querschnitt ist in Fig. 2 1 dargestellt. In einer Vorstanzstation 4 erfolgt ein Lochen des Bandmaterials 1 in einer Presse, so dass sich im gelochten Bereich ein Querschnitt ergibt, wie er in Fig. 2 II dargestellt ist. In einer nachfolgend angeordneten Tiefziehstation 5 wird der Randbereich der im Rahmen des Lochens hergestellten Öffnung nach unten tiefgezogen, so dass sich im gelochten Bereich ein Querschnitt ergibt, wie er in Fig. 2 III dargestellt ist. Die Bewegungsabläufe der Stempel von Vorstanzstation 4 und Tiefziehstation 5 sind gemäß dem vorliegenden Ausführungsbeispiel miteinander gekoppelt, so dass der Stanz- bzw. Tiefziehvorgang gleichzeitig erfolgt Stanz- und Tiefziehvorgang sind vorteilhafterweise geometrisch aufeinander abgestimmt. Hierbei können als Positionierhilfen Indexelemente, beispielsweise Löcher oder Stifte zum Einsatz kommen.

Anschließend an das Tiefziehen erfolgt das Rollformen des geraden Bandes über mehrere Rollensätze zu einer Profilblume, welche am Ende des Walzvorganges einen bevorzugt geschlossenen Querschnitt aufweist. Ein Hochbiegen der Ränder erfolgt in einer Profilierstation 6 mittels Rollprofilierens mit mehreren Rollsätzen in mehreren Schritten, wobei in den ersten Umformvorgängen der äußere Randbereich um 90° nach oben gebogen wird.-Ein entsprechender Querschnitt ist in Fig. 2 IV dargestellt. In weiteren Schritten erfolgt ein Biegen weiter innen, so dass sich die äußeren Enden der im ersten Schritt nach oben gebogenen Randbereiche berühren. Ein entsprechender Querschnitt ist in Fig. 2 V dargestellt. Die sich berührenden Enden werden in einer nachfolgenden Schweißstation 7 miteinander verschweißt, so dass das Profil fertig gestellt ist. Das Ablängen der einzelnen Querträger 1 erfolgt in einer die Einheit abschließenden Trennstation 8.

Vorteilhafterweise wird hierbei auf möglichst einfache und rationelle Weise ein Rollprofilelement hergestellt, welches im Bereich der Löcher sehr hohe Steifigkeitsanforderungen erfüllt.

## Patentansprüche

1. Verfahren zur Herstellung eines Querträger, insbesondere für ein Kraftfahrzeug, wobei
in einem ersten Schritt ein Blech in einer Vorstanzstation (4) gelocht wird, so dass zumindest eine Öffnung im Blech vorgesehen ist,
in einem zweiten Schritt in zumindest einer Tiefziehstation (5) ein Teilbereich des Blechs tiefgezogen wird, und
in einem dritten Schritt das Profil des Querträgers in einer Profilierstation (6) gebogen wird.

2. Verfahren nach Anspruch 1, **dadurch gekennzeichnet, dass** in der Tiefziehstation (5) ein Kragen um die Öffnung im Blech ausgebildet wird

3. Verfahren nach Anspruch 1 oder 2, **dadurch gekennzeichnet, dass** das Blech als Bandmaterial (1) von einem Coil abgewickelt wird und über einen Bandvorschub der Vorschubstation (3) zugeführt wird.

4. Verfahren nach einem der vorhergehenden Ansprüche, **dadurch gekennzeichnet, dass** das Blech als Bandmaterial (1) zugeführt wird und bis zumindest zur Profilierstation (6) einstückig bleibt.

5. Verfahren nach einem der vorhergehenden Ansprüche, **dadurch gekennzeichnet, dass** in der Profilierstation zuerst im äußeren Bereich beidseitig ein Rand umgebogen und anschließend weiter innen der Bereich mit den Rändern nach oben gebogen wird, so dass sich die Endbereiche der Ränder berühren oder überlappen.

6. Verfahren nach einem der vorhergehenden Ansprüche, **dadurch gekennzeichnet, dass** nach der Profilierstation (6) ein Schweißvorgang erfolgt.

7. Verfahren nach Anspruch 6, **dadurch gekennzeichnet, dass** nach dem Schweißvorgang die Querträger abgetrennt werden.

8. Verfahren nach einem der vorhergehenden Ansprüche, **dadurch gekennzeichnet, dass** zwischen einzelnen Stationen bis zur Profilierstation (6) Pufferbereiche vorgesehen sind, in denen das Blech elastisch quer zur Förderrichtung gebogen werden kann.

9. Einrichtung zur Durchführung eines Verfahrens nach einem der Ansprüche 1 bis 8, **gekennzeichnet durch** eine Coilaufnahme (2), einen Barrdvorschub (3), eine Vorstanzstation (4), eine Tiefziehstation (5), eine Profilierstation (6) und eine Trennstation (8).

10. Einrichtung nach Anspruch 9, **dadurch gekennzeichnet, dass** nach der Profilierstation (6) eine Schweißstation (7) vorgesehen ist.

11. Einrichtung nach Anspruch 9 oder 10, **dadurch gekennzeichnet, dass** nach der Trennstation (8) eine Biegestation vorgesehen ist.

12. Querträger aus einem gebogenen Hohlprofil mit mindestens einer Öffnung, wobei der Querträger nach einem Verfahren gemäß einem der Ansprüche 1 bis 8 hergestellt ist.

13. Querträger nach Anspruch 12, **dadurch gekennzeichnet, dass** der Querträger einen geschlossenen Querschnitt mit genau einer Schließnaht und/oder einen nach außen weisenden Lochrand aufweist.

14. Querträger nach einem der Ansprüche 12 bis 13, **dadurch gekennzeichnet, dass** an dem Querträger weitere Halter, Schweißbolzen oder andere Anbauteile angebracht sind.

15. Querträger nach einem der Ansprüche 12 bis 14, **dadurch gekennzeichnet, dass** der Querträger zusammen mit Anbauteilen in ein Fahrzeug eingebaut ist.
